(19) Europäisches Patentamt
European Patent Office
Office européen des brevets

(11) EP 2 556 099 B1

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(21) Anmeldenummer: **11706821.3**

(22) Anmeldetag: **07.03.2011**

(51) Int Cl.:
***C08G 18/22*** (2006.01) ***C08G 18/48*** (2006.01)
***C08G 18/76*** (2006.01) ***C08J 9/12*** (2006.01)

(86) Internationale Anmeldenummer:
**PCT/EP2011/053358**

(87) Internationale Veröffentlichungsnummer:
**WO 2011/124432 (13.10.2011 Gazette 2011/41)**

(54) **HERSTELLUNG UND VERWENDUNG VON METALLSALZEN VON ALKYLOXID- UND/ODER ARYLALKYLOXID-OLIGOMEREN UND -POLYMEREN MIT SÄUREENDGRUPPEN BEI DER HERSTELLUNG VON POLYURETHANSYSTEMEN**

PRODUCTION AND USE OF METAL SALTS OF ALKYL OXIDE AND/OR ARYL ALKYL OXIDE OLIGOMERS AND POLYMERS WITH ACID END GROUPS IN THE PRODUCTION OF POLYURETHANE SYSTEMS

FABRICATION ET UTILISATION DE SELS MÉTALLIQUES D'OLIGOMÈRES ET DE POLYMÈRES D'OXYDE D'ALKYLE ET/OU D'OXYDE D'ARYLALKYLE À GROUPES TERMINAUX ACIDES LORS DE LA FABRICATION DE SYSTÈMES DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2010 DE 102010003672**

(43) Veröffentlichungstag der Anmeldung:
**13.02.2013 Patentblatt 2013/07**

(73) Patentinhaber: **Evonik Degussa GmbH**
**45128 Essen (DE)**

(72) Erfinder:
- **SCHMITZ, Sarah**
  **47198 Duisburg (DE)**
- **HUBEL, Roland**
  **45136 Essen (DE)**

(56) Entgegenhaltungen:

**EP-A1- 0 344 442** **EP-A1- 1 078 946**
**EP-A1- 1 167 410** **EP-A2- 1 013 704**
**US-B1- 6 303 804** **US-B1- 6 720 447**
**US-B1- 7 273 942**

- **OLIVER ZECH, MATTHIAS KELLERMEIER, STEFAN THOMAIER, EVA MAURER, REGINA KLEIN, CHRISTIAN SCHREINER, WERNER KUNZ: "Alkali Metal Oligoether Carboxylates-A New Class of Ionic Liquids", CHEMISTRY - A EUROPEAN JOURNAL, Bd. 15, Nr. 6, 26. Januar 2009 (2009-01-26), Seiten 1341-1345, XP55000086, ISSN: 0947-6539, DOI: 10.1002/chem.200801806**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 556 099 B1

Printed by Jouve, 75001 PARIS (FR)

## Beschreibung

Die Erfindung betrifft die Herstellung und Verwendung von Metallsalzen von mit Säureendgruppen modifizierten Alkyloxid- und Arylalkyloxid-haltigen Oligomeren und Polymeren und deren Lösungen bei der Herstellung von Polyurethansystemen (PUR-Systeme).

Polyurethansysteme sind z. B. Polyurethanbeschichtungen, Polyurethanadhäsive, Polyurethandichtmittel, Polyurethanelastomere oder Polyurethanschäume/ -schaumstoffe.

Polyurethanschaumstoffe finden aufgrund ihrer hervorragenden mechanischen und physikalischen Eigenschaften in den verschiedensten Bereichen Verwendung. Einen besonders wichtigen Markt für verschiedenste Typen von PUR-Schäumen, wie konventionelle Weichschäume auf Ether- und Esterpolyolbasis, Kaltschäume (häufig auch als HR-Schäume bezeichnet), Hartschäume, Integralschäume und mikrozellulare Schäume, sowie Schäume deren Eigenschaften zwischen diesen Klassifizierungen liegen, wie z. B. halbharte Systeme, stellt die Automobil- und die Möbelindustrie dar. Es werden z. B. Hartschäume als Dachhimmel, Esterschäume zur Innenverkleidung der Türen sowie für ausgestanzte Sonnenblenden, Kalt- und Weichschäume für Sitzsysteme und Matratzen verwendet.

Für einkomponentige feuchtigkeitsreaktive Polyurethanzusammensetzungen geeignete Katalysatoren enthalten meist Zinnverbindungen, wie Zinncarboxylate, insbesondere Zinnoctoat (entspricht Zinn-2-Ethylhexanoat), vielfach kombiniert mit tertiären Aminen.

So wird die Verwendung von Zinnoctoat bei der Herstellung von PUR-Weichschäumen auf der Basis von Polyetherolen beispielsweise in Steve Lee, Huntsman Polyurethanes, The Polyurethanes Book, Verlag Wiley, S. 140, 143-144 und Ron Herrington, Flexible Polyurethane Foams, Dow Chemical, S. 2.30 beschrieben. Das Zinnoktoat dient als Katalysator der Reaktion von Isocyanaten mit Polyolen (auch als Gelkatalysator bezeichnet) über einen komplexen Übergangszustand. Während der Herstellung des Schaumes hydrolysiert das Zinnoctoat und setzt sowohl das Salz der 2-Ethylhexansäure, als auch die Säure an sich, frei. Die Zersetzung ist zwar erwünscht, weil auf diese Weise die Rückreaktion der Urethanbindung zu den Edukten unterbunden ist, sollte nach Möglichkeit jedoch nicht zur Freisetzung eventuell toxikologisch bedenklicher Substanzen führen. Auch in der Patentliteratur sind zahlreiche Anmeldungen zu finden, die die Verwendung von besagtem Zinnoctoat beschreiben, so z. B. in BE 779607, GB 1432281, GB 1422056, GB 1382538, GB 1012653, GB 982280 genannt. In diesen Schriften werden als bevorzugte Katalysatorsysteme solche eingesetzt, die Zinnoctoat aufweisen.

Solche Zinn-Katalysatoren geraten jedoch in neuerer Zeit seitens der Anwender immer mehr unter Druck aufgrund toxikologischer Bedenken bezüglich der zu ihrer Herstellung verwendeten Edukte, insbesondere der Liganden. Daher besteht ein zunehmender Bedarf an toxikologisch unbedenklicheren Alternativen.

Zur Erfüllung der sich in den letzten Jahren deutlich verschärfenden Anforderungen an die Automobil- und Möbelindustrie und deren Schaumstoffzulieferer bezüglich Emissions- und Toxizitätsspezifikationen wurden bereits Katalysatorsysteme entwickelt, die weniger toxische, in den Schaum einpolymerisierbare Liganden enthalten. Solche Systeme werden beispielsweise in EP 1013704 beschrieben. Dadurch, dass in dieser Anwendung natürliche Ricinolsäure verwendet wird, kann es zu Schwankungen des Zinngehalts im Endprodukt und zu Produktionsproblemen aufgrund von nicht hinreichender Phasentrennung oder Filtrierbarkeit kommen. Zudem sind die erhaltenen Produkte hochviskos und daher meist nur in verdünnter Weise verarbeitbar.

Oben genannte Systeme stellten bis dato eine der wenigen Alternativen zu den weitverbreiteten Zinnoctoat-Katalysatorsystem (Zinn(II)-Salz der 2-Ethylhexansäure) bzw. Organozinnverbindungen, wie Dibutylzinndilaurat dar. Letztgenannte Systeme sind im Hinblick auf die Toxizität der emittierenden Substanzen kritisch zu betrachten. Die beispielsweise während und nach der Verschäumung freiwerdende 2-Ethylhexansäure gibt wegen möglicher fruchtschädigender (entwicklungsschädigender) Wirkungen beim Menschen (R 63) Anlass zur Besorgnis.

Eine weitere Alternative zu den herkömmlichen Zinnkatalysatoren stellen Bismut-Katalysatoren dar. Als Bismut-Katalysatoren für Polyurethanzusammensetzungen bekannt sind beispielsweise Bismutcarboxylate, z.B. Bismut-Octoat (Bismutsalz der 2-Ethylhexansäure), wie in WO 98/36007 erwähnt. Allerdings ist die katalytische Aktivität von Bismut-Verbindungen in Bezug auf die Isocyanat-Wasser-Reaktion deutlich geringer als jene von Zinn-Katalysatoren und die Emission an 2-Ethylhexansäure stellt auch bei diesem Katalysatorsystem ein Problem dar.

Aufgabe der vorliegenden Erfindung war deshalb die Bereitstellung eines Katalysatorsystems, welches einen oder mehrere der vorgenannten Nachteile nicht aufweist.

Überraschenderweise wurde nun gefunden, dass Katalysatorsysteme gemäß Anspruch 1 diese Aufgabe lösen. Gegenstand der vorliegenden Erfindung sind deshalb Katalysatorsysteme, geeignet zur Katalyse der Herstellung von Polyurethansystemen, welche dadurch gekennzeichnet sind, dass die Katalysatorsysteme zumindest ein Metallsalz einer Carbonsäure gemäß Formel (I)

$$R^1\text{-O-}[(AlkO)_a\text{-}(ArylalkO)_b]_x\text{-}\{[C(O)\text{-}Z]_y\text{-}(CR^2R^3)_z\}_m\text{-}COO^-M^{n+}{}_{1/n}, \qquad (I)$$

mit

$R^1$ = linearer, verzweigter oder cyclischer Kohlenwasserstoffrest mit 1 bis 10 Kohlenstoffatomen,
Z = gesättigter oder ungesättigter, aliphatischer, aromatischer oder gemischt aliphatisch-aromatischer, linearer, verzweigter oder cyclischer Kohlenstoffrest mit 1 bis 30 Kohlenstoffatomen mit gegebenenfalls weiteren Heteroatomen, vorzugsweise ausgewählt aus Stickstoff, Sauerstoff, Schwefel und Phosphor,
$R^2$, $R^3$ = unabhängig voneinander H oder ein linearer oder verzweigter Kohlenwasserstoffrest mit 1 bis 10 Kohlenstoffatomen, vorzugsweise H oder Methyl, bevorzugt H,
x = 1 bis 10, vorzugsweise 1 bis 5, bevorzugt 1 bis 2,
y = 0 oder eine ganze Zahl $\geq$ 1, vorzugsweise von 1 bis 3, bevorzugt 1, wobei y besonders bevorzugt 0 ist wenn z = 1 ist,
z = 0 oder eine ganze Zahl $\geq$ 1, vorzugsweise von 1 bis 3, bevorzugt 1, wobei z besonders bevorzugt 0 ist wenn y = 1 ist,
m = eine ganze Zahl $\geq$ 1, vorzugsweise 1
n = eine ganze Zahl $\geq$ 1, vorzugsweise von 1 bis 3, bevorzugt 1, M = Zinn
AlkO = gleiche oder verschiedene Alkylenoxideinheiten,
ArylalkO = gleiche oder verschiedene Arylalkylenoxideinheiten, a = 0 bis 20, vorzugsweise 1 bis 5,
b = 0 bis 20, vorzugsweise 1 bis 5,

$$a + b \geq 1,$$

wobei die mit den Indices a und b bezeichneten Einheiten blockweise oder statistisch verteilt im Molekül in beliebiger Reihenfolge angeordnet sein können, enthält.

Ebenfalls Gegenstand der vorliegenden Erfindung ist die Verwendung solcher Katalysatorsysteme bei der Herstellung von Polyurethansystemen sowie entsprechende Polyurethansysteme, insbesondere Polyurethanschäume und deren Verwendung.

Das erfindungsgemäße Katalysatorsystem hat den Vorteil, dass es sowohl zur Herstellung von flexiblen Schäumen auf Basis von Ether- und Esterpolyolen als auch von Hartschäumen sowie Schäumen, deren Eigenschaften zwischen diesen Klassifizierungen liegen, wie z.B. halbharte Schäume, geeignet ist.

Im Vergleich zu Katalysatorsystemen, die auf natürlichen, als Emulgatoren wirkenden Säuren, wie beispielsweise Ricinolsäure, basieren, lassen sich die erfindungsgemäßen Katalysatorsysteme ohne Probleme, wie beispielsweise unzureichende Phasentrennung, schnell und kostengünstig synthetisieren.

Die erfindungsgemäßen Katalysatorsysteme haben den großen Vorteil, dass durch die variable Polymerkettenlänge die Viskosität des zuzugebenden Katalysators bei dessen Herstellung gezielt eingestellt werden kann. Es können außerdem Eigenschaften wie Zinngehalt, Molekulargewicht und somit auch Aktivität bzw. Reaktivität des Katalysatorsystems gezielt eingestellt werden.

Durch die Verwendung des erfindungsgemäßen Katalysatorsystems können zudem Polyurethansysteme unter Verwendung toxikologisch unbedenklicher Edukte hergestellt werden, die auch unter thermischen Extrembedingungen keine toxikologisch bedenklichen Spaltprodukte emittieren. Je nach Molekulargewicht der polymeren Katalysatorliganden ist das Entweichen dieser aus dem Schaum minimal bis nicht nachweisbar. Diese Vorteile lassen sich erzielen, ohne dass sich die sonstigen physikalischen Eigenschaften, wie z.B. Dichte, Härte, Rückprallelastizität oder Stauchhärte, ändern bzw. signifikant verschlechtern.

Die erfindungsgemäßen Katalysatorsysteme, das Verfahren zur Herstellung der Polyurethanschäume, die Polyurethanschäume selbst sowie deren Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören.

Das erfindungsgemäße Katalysatorsystem, welches zur Katalyse der Herstellung von Polyurethanschäumen geeignet ist, zeichnet sich dadurch aus, dass es ein Metallsalz eines mit einer Säureendgruppe modifizierten Alkohols enthält, der ggf. mit Alkyloxid- und/oder Arylalky-haltigem Oligomer oder Polymer modifiziert wurde. Das erfindungsgemäße Katalysatorsystem zeichnet sich insbesondere dadurch aus, dass das Katalysatorsystem ein Metallsalz einer Carbonsäure gemäß Formel (I)

$$R^1\text{-O-}[(AlkO)_a\text{-}(ArylalkO)_b]_x\text{-}\{[C(O)^-Z]_y\text{-}(CR^2R^3)_z\}_m\text{-COO}^-M^{n+}{}_{1/n} \qquad (I)$$

mit

$R^1$ = linearer, verzweigter oder cyclischer Kohlenwasserstoffrest, vorzugsweise Alkylrest mit 1 bis 20, vorzugsweise 1 bis 6 und bevorzugt 2 bis 4 Kohlenstoffatomen,

Z = gesättigter oder ungesättigter, aliphatischer, aromatischer oder gemischt-aliphatisch-aromatischer, linearer, verzweigter oder cyclischer Kohlenstoffrest mit 1 bis 30 Kohlenstoffatomen mit gegebenenfalls weiteren Heteroatomen, vorzugsweise ausgewählt aus Stickstoff, Sauerstoff, Schwefel und Phosphor, bevorzugt ist Z ein gesättigter oder ungesättigter aliphatischer oder aromatischer Rest mit 1 bis 10, vorzugsweise 2 bis 6 Kohlenstoffatomen, der kein Heteroatom oder lediglich Sauerstoff enthält, besonders bevorzugt ein ungesättigter oder gesättigter linearer aliphatischer Rest mit 2 bis 6 Kohlenstoffatomen, der kein Heteroatom enthält,

$R^2$, $R^3$ = unabhängig voneinander H oder ein linearer oder verzweigter Kohlenwasserstoffrest mit 1 bis 10 Kohlenstoffatomen, vorzugsweise H oder Methyl, bevorzugt H,

x = 1 bis 10, vorzugsweise 1 bis 5, bevorzugt 1 bis 2,

y = 0 oder eine ganze Zahl ≥ 1, vorzugsweise von 1 bis 3, bevorzugt 1, wobei y besonders bevorzugt 0 ist wenn z = 1 ist,

z = 0 oder eine ganze Zahl ≥ 1, vorzugsweise von 1 bis 3, bevorzugt 1, wobei z besonders bevorzugt 0 ist wenn y = 1 ist, m = eine ganze Zahl ≥ 1, vorzugsweise 1

n = eine ganze Zahl ≥ 1, vorzugsweise von 1 bis 3, bevorzugt 1, M = Zinn,

AlkO = gleiche oder verschiedene Alkylenoxideinheiten, ArylalkO = gleiche oder verschiedene Arylalkylenoxideinheiten, vorzugsweise Styroloxideinheiten,

a = 0 bis 20, vorzugsweise 1 bis 20 und bevorzugt 2 bis 10,

b = 0 bis 20, vorzugsweise 0 bis 10 und bevorzugt 1 oder 2,

a + b ≥ 1, bevorzugt 1 bis 20, besonders bevorzugt 2 bis 12 und ganz besonders bevorzugt 2 bis 5, wobei die mit den Indices a und b bezeichneten Einheiten blockweise oder statistisch verteilt, vorzugsweise blockweise im Molekül in beliebiger Reihenfolge angeordnet sein können, enthält.

Ein Beispiel für ein Metallsalz der Formel (I), bei dem Z = - CH=CH- entspricht, AlkO = EO, a = 2, b = 0, x = 1, y = 1, z = 0 und m = 1 ist, stellt z.B. eine Verbindung der nachfolgenden Formel (Ia) dar.

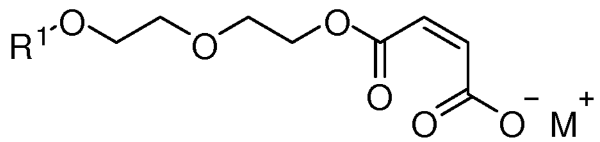

(Ia)

Ein Beispiel für ein Metallsalz der Formel (I), bei dem Z einem 6-gliedrigen Ring entspricht, AlkO = EO, a = 2, b = 0, x = 1, y = 1, z = 0 und m = 1 ist, stellt z.B. eine Verbindung der nachfolgenden Formel (Ib) dar.

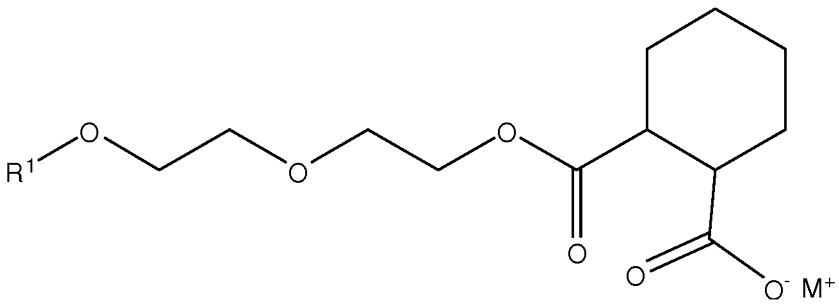

(Ib)

Vorzugsweise enthält das erfindungsgemäße Katalysatorsystem ein Salz der Formel (I) welches der Formel (II) genügt:

$$R^1\text{-O-}[(EO)_c\text{-}(PO)_d\text{-}(BO)_e\text{-}(SO)_f]_x\text{-}\{[C(O)\text{-}Z]_y\text{-}(CR^2R^3)_z\}_m\text{-COOM}^{n+}{}_{1/n} \quad (II)$$

mit

$R^1$, $R^2$, $R^3$, Z, m, n, x, y, z und M wie oben definiert,

EO = Ethylenoxideinheit,

PO = Propylenoxideinheit, wobei der Propylenrest linear oder verzweigt sein kann,

BO = Butylenoxideinheit, wobei der Butylenrest linear oder verzweigt sein kann,

SO = Styroloxideinheit,

c = 0 bis 20, vorzugsweise 0 bis 10, bevorzugt 1 bis 5,
d = 0 bis 20, vorzugsweise 0 bis 10, bevorzugt 1 bis 5,
e = 0 bis 20, vorzugsweise 0 bis 10, bevorzugt 1 bis 5,
f = 0 bis 20, vorzugsweise 0 bis 10, bevorzugt 1 bis 5,
c + d + e + f $\geq$ 1, vorzugsweise 2 bis 20, bevorzugt 2 bis 5, wobei die mit den Indices c, d, e und f bezeichneten Einheiten blockweise oder statistisch verteilt, vorzugsweise blockweise im Molekül angeordnet sein können und beliebige Reihenfolge aufweisen können.

Durch den bevorzugten Einsatz von kurzkettigen Monoolen ($R^1$= Alkylrest mit 1 bis 6 Kohlenstoffatomen), wie z.B. Methanol, Ethanol, (iso-)Propanol oder Butanol als Startalkohol (aus dem der Rest $R^1$ resultiert) kann erreicht werden, dass die Polyetherole keine Verzweigungen und nicht mehr als eine reaktive Gruppe aufweisen.

Bevorzugte Katalysatorsysteme sind:

A) solche bei denen in Formel (II) f = 0, c und/oder d und e jeweils ungleich 0 und die Summe c + d bzw. c + e bzw. d + e = 2 bis 5 oder c + d + e = 3 bis 5 ist, bevorzugt solche, bei denen $R^1$ ein Butyl-, Isopropyl-, tert-Butyl-, 3,5,5-Trimethyl-1-hexyl- oder 2-Octyldodecylrest ist,
B) solche bei denen in Formel (II) c, e und f = 0, und d von 1 bis 3 ist, bevorzugt solche, bei denen $R^1$ ein Butylrest ist,
C) solche bei denen in Formel (II) d, e und f = 0, und c von 1 bis 3 ist, bevorzugt solche, bei denen $R^1$ ein Butylrest ist,
D) solche bei denen in Formel (II) d und f = 0, c und e jeweils ungleich 0 und die Summe c + e = 2 bis 4 ist, bevorzugt solche, bei denen $R^1$ ein Butyl-, Isopropyl-, tert-Butyl-, 3,5,5-Trimethyl-1-hexyl- oder 2-Octyldodecylrest ist, oder
E) solche bei denen in Formel (II) d und e = 0, c und f jeweils ungleich 0 und die Summe c + f = 2 bis 4 ist, bevorzugt solche, bei denen $R^1$ ein Butyl-, Isopropyl-, tert-Butyl-, 3,5,5-Trimethyl-1-hexyl- oder 2-Octyldodecylrest ist.

Besonders bevorzugte Katalysatorsysteme sind solche, die Salze der Formel (I) oder (II), insbesondere die als bevorzugt bezeichneten Salze der Formel (II) enthalten, bei denen M = Sn, n = 2. z = 1, m = 1 und y = 0 ist.

Vorzugsweise ist die Verbindung der Formel (I) bzw. (II) so gewählt, dass dieser mindestens ein Molekulargewicht von 90, vorzugsweise von 120 bis 600, bevorzugt von 160 bis 300 g/mol aufweist.

Die Metallsalze der Formel (I) bzw. (II) sind vorzugsweise Salze der Metalle der Ia., IIa., IVa. oder Va. Hauptgruppe, sowie der Ib., IIb. oder VIIIb. Nebengruppe des Periodensystems der Elemente (CAS-Notation). Bevorzugte Salze sind solche der Metalle Na, K, Mg, Ca, Sn, Pb, Bi, Zn, Cu, Fe, Co oder Ni, vorzugsweise Salze des Zinns, Zinks oder Bismuts, bevorzugt des Zinns.

Das Katalysatorsystem kann ausschließlich die Metallsalze aufweisen oder die Metallsalze in Kombination mit einem oder mehreren Lösungsmittel, wie z. B. Wasser und/oder einem oder mehreren organischen Lösungsmitteln enthalten. Vorzugsweise enthält das Katalysatorsystem ein oder mehrere organische Lösungsmittel. Bevorzugt enthält das Katalysatorsystem zumindest ein organisches aprotisches Lösungsmittel. Enthält das Katalysatorsystem ein organisches Lösungsmittel, so ist dieses vorzugsweise ausgewählt aus Polyolen, Estern, Polyestern, Olefinen, Phthalaten, endverkappten Polyethern oder Mineralölen. Wird das Metallsalz gelöst oder in Kombination mit einem Lösungsmittel eingesetzt, beträgt das Massenverhältnis von Metallsalz zu Lösungsmittel vorzugsweise von 100 zu 1 bis 1 zu 2, bevorzugt von 50 zu 1 bis 1 zu 1 und besonders von 25 zu 1 bis 2 zu 1.

Neben dem/den Metallsalz(en) und einem oder mehreren Lösungsmitteln kann das Katalysatorsystem weitere Komponenten, wie z. B. ein oder mehrere tertiäre Amine, ein oder mehrere Silikonstabilisatoren und gegebenenfalls ein oder mehrere Emulgatoren aufweisen. Bevorzugt liegt es jedoch separat oder gelöst vor.

Die erfindungsgemäßen Metallsalze der Formel (I) können z. B. dadurch erhalten werden, dass ein Monool ($R^1$-OH, mit $R^1$ wie oben angegeben) oder ein, mittels eines entsprechenden Monools gestarteter oligomerer oder polymerer Ether (nachfolgend Polyetherol genannt) mit einer Verbindung umgesetzt wird, die geeignet ist, das Wasserstoffatom des Monools bzw. Polyetherols durch eine Carbonsäuregruppe oder ein entsprechendes Carbonsäuresalz zu substituieren. Geeignete Verbindungen dieser Art, die nachfolgend als Carboxylierungsmittel bezeichnet werden, sind beispielsweise mit einem Halogen oder einer Tosylgruppe substituierte Alkylreste aufweisende Carbonsäuren oder deren Metallsalze, insbesondere Alkali-, insbesondere Kalium- oder Natrium-, Zinn-, Bismut- oder Zinksalze oder aber Di- oder Polycarbonsäuren, z.B. aromatische Dicarbonsäuren wie beispielsweise Phthalsäure, Terephthalsäure, Isophthalsäure und 1,8-Naphthaldicarbonsäure, heterozyklische Dicarbonsäuren, wie beispielsweise Chinolinsäure und Pyrazin-2,3-dicarbonsäure, Doppelbindungen aufweisende Dicarbonsäuren, wie beispielsweise Fumarsäure, Maleinsäure und Methyltetrahydrophthalsäure, aliphatische Dicarbonsäuren wie beispielsweise Bernsteinsäure, Glutarsäure, Diglycolsäure, 3-Methylglutarsäure, Hexahydroterephthalsäure, Hexahydrophthalsäure, Adipinsäure, Pimelinsäure, Korksäure, Azelainsäure, Sebacinsäure oder deren Anhydride, wie Malein-, Bernstein-, Glutar-, Diglycol-, Phthal- oder Hexahydrophthalsäureanhydride. Bevorzugte Carboxylierungsmittel sind z. B. Monochloressigsäure, Monobromessigsäure oder 3-Chlorpropansäure, oder deren Metallsalze oder aber Bernstein- oder Maleinsäureanhydrid.

Nach der Umsetzung des Monools oder des Polyetherols mit dem Carboxylierungsmittel kann es vorteilhaft

sein, wenn das erhaltene Reaktionsprodukt mit $SnCl_2$ umgesetzt wird. Diese Umsetzung kann, wie in US 4,532,262 beschrieben, erfolgen.

Geeignete Polyether können durch alle im Stand der Technik bekannten Verfahren erhalten werden. Bevorzugte Verfahren zur Herstellung von Alkoxylierungsprodukten (Polyethern) bedienen sich basischer Katalysatoren wie z.B. der Alkalihydroxide und der Alkalimethylate. Besonders verbreitet und seit vielen Jahren bekannt ist der Einsatz von Kaliumhydroxid oder Kaliummethylat. Typischerweise wird der Startalkohol, wie z. B. Ethanol, Propanol, Butanol, Pentanol, Hexanol, Oktanol oder Nonanol, in Gegenwart eines alkalischen Katalysators mit einem Alkylenoxid, wie Ethylenoxid, Propylenoxid oder Butylenoxid oder einem Arylalkylenoxid, wie z.B. Styroloxid, oder ein Gemisch dieser Verbindungen zu einem Polyoxy(aryl)alkylenpolyether umgesetzt. Die basenkatalysierte Herstellung von Polyethern ist beispielsweise in der EP-A-1431331 beschrieben. Neben der basenkatalysierten Reaktion sind auch saure Katalysen zur Alkoxylierung bekannt. So wird in DE 10 2004 007561 die Verwendung von $HBF_4$ und von Lewis-Säuren wie z.B. $BF_3$, $AlCl_3$ und $SnCl_4$ als Katalysatoren bei der Herstellung von Polyethern beschrieben. Als Katalysatoren zur Herstellung von Polyetheralkoholen können aber auch Multimetallcyanidverbindungen oder Doppelmetallcyanid-Katalysatoren, allgemeingebräuchlich auch als DMC-Katalysatoren bezeichnet, eingesetzt werden. Durch den Einsatz von DMC-Katalysatoren wird der Gehalt an ungesättigten Nebenprodukten minimiert. Außerdem verläuft die Umsetzung, verglichen mit den üblichen basischen Katalysatoren, mit einer deutlich höheren Raum-ZeitAusbeute. Die Herstellung und Verwendung von Doppelmetallcyanid-Komplexen als Katalysatoren ist seit den 1960er Jahren bekannt und wird zum Beispiel in US 3,427,256, US 3,427,334, US 3,427,335, US 3,278,457, US 3,278,458, US 3,278,459 beschrieben.

Das erfindungsgemäße Katalysatorsystem kann insbesondere zur Herstellung von Polyurethanbeschichtungen, Polyurethanadhäsiven, Polyurethandichtmitteln, Polyurethanelastomeren oder Polyurethanschäume/ -schaumstoffen, bevorzugt zur Herstellung von Polyurethanschäumen eingesetzt werden. Das erfindungsgemäße Katalysatorsystem wird dabei der Reaktionsmischung vor oder während der Reaktion (zur Ausbildung der Urethanbindungen) zugegeben, bevorzugt mit Hilfe eines Mischkopfes zudosiert.

Wie beschrieben, kann das Katalysatorsystem weitere Bestandteile, wie z. B. Wasser, tertiäres Amin, Silikonstabilisator und gegebenenfalls Emulgator aufweisen. Eine solche Lösung des Katalysators wird häufig als Aktivatorlösung bezeichnet. Bevorzugt wird das Katalysatorsystem jedoch separat zugegeben, gegebenenfalls gelöst in einem Polyetherpolyol.

In dem erfindungsgemäßen Verfahren ist die direkte Zudosierung eines Katalysatorsystems, welches ausschließlich das bzw. die Metallsalze aufweist, bevorzugt. Bei der direkten Zudosierung des Katalysatorsystems sollten die Salze der Formel (I) vorzugsweise flüssig vorliegen, um ohne die Verwendung von Lösungsmittel eine einfache Zugabe zu gewährleisten.

Sowohl Viskosität als auch Metallgehalt des Katalysatorsystems kann durch Änderung der Kettenlänge der Säure bzw. durch die Auswahl der Reaktanden variiert werden, sodass eine für das jeweilige System optimale Reaktivität und Viskosität eingestellt werden kann. Die direkte Dosierung des viskosen Zinnricinoleats (Salz der Ricinolsäure) in die Polyurethansystemkomponenten, insbesondere Verschäumungskomponenten hingegen kann aufgrund dessen sehr hoher Viskosität zu Problemen führen. Da viele Verschäumer nur über eine direkte Dosierung verfügen, ist ein Produkt, welches den gegebenen Bedingungen individuell angepasst werden kann, deshalb von großem Vorteil.

Alternativ zur direkten Verschäumung kann das Katalysatorsystem auch in verdünnter Form zudosiert werden. Dabei sind wasserfreie Lösungen vorzuziehen, da einige Übergangsmetallsalze nur bedingt hydrolysestabil sind.

Die erfindungsgemäßen Katalysatorsysteme sind als Katalysatoren in den üblichen Formulierungen zur Herstellung von Polyurethansystemen, insbesondere Polyurethanschäumen/- schaumstoffen, bestehend aus einem oder mehreren organischen Isocyanaten mit zwei oder mehr Isocyanat-Funktionen, einem oder mehreren Polyolen mit zwei oder mehr gegenüber Isocyanat reaktiven Gruppen, ggf. weiteren Katalysatoren für die Reaktionen Isocyanat-Polyol und/oder Isocyanat-Wasser und/oder die Isocyanat-Trimerisierung, Wasser, optional physikalischen Treibmitteln, optional Flammschutzmitteln und ggf. weiteren Additiven, einsetzbar.

Geeignete Isocyanate im Sinne dieser Erfindung sind vorzugsweise alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch.

Geeignete Polyole im Sinne dieser Erfindung sind vorzugsweise alle organischen Substanzen mit mehreren gegenüber Isocyanaten reaktiven Gruppen, sowie deren Zubereitungen. Bevorzugte Polyole sind alle zur Herstellung von Polyurethansystemen, insbesondere Polyurethanschaumstoffen üblicherweise verwendeten Polyetherpolyole und Polyesterpolyole. Polyetherpolyole werden durch Umsetzung von mehrwertigen Alkoholen oder Aminen mit Alkylenoxiden gewonnen. Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen). Zudem können auf natürlichen Ölen basierende Polyether (natural oil based polyols, NOPs)eingesetzt werden. Diese Polyole werden aus natürlichen Ölen wie z.B. Soja- oder Palmöl gewonnen und können

unmodifiziert oder modifiziert verwendet werden.

Ein geeignetes Verhältnis von Isocyanat und Polyol, ausgedrückt als Index der Formulierung, liegt im Bereich von 10 bis 1000, bevorzugt 40 bis 350. Dieser Index beschreibt das Verhältnis von tatsächlich eingesetztem Isocyanat zu (für eine stöchiometrische Umsetzung mit Polyol) berechnetem Isocyanat. Ein Index von 100 steht für ein molares Verhältnis der reaktiven Gruppen von 1 zu 1.

Geeignete Einsatzmengen des erfindungsgemäßen Katalysatorsystems richten sich nach dem Typ des Katalysators und liegen üblicherweise im Bereich von 0,01 bis 5 pphp (= Gewichtsteilen an Verbindungen der Formel (I) bzw. (II) bezogen auf 100 Gewichtsteile Polyol), vorzugsweise von 0,05 bis 1 pphp. Bei beispielsweise einem 400 g Schaum (400 g ~ 0,114 mol Polyol) entspricht dies einer molaren Einsatzmenge von $1*10^{-5}$ bis $1*10^{-2}$ mol.

Geeignete weitere Katalysatoren die im erfindungsgemäßen Verfahren zusätzlich eingesetzt werden können sind Substanzen, die die Gelreaktion (Isocyanat-Polyol), die Treibreaktion (Isocyanat-Wasser) oder die Di- bzw. Trimerisierung des Isocyanats katalysieren. Typische Beispiele sind Amine, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, Zinnverbindungen wie Dibutylzinndilaurat und Kaliumsalze wie Kaliumacetat. Vorzugsweise werden als weitere Katalysatoren solche eingesetzt, die keine Zinnverbindungen, insbesondere kein Dibutylzinndilaurat enthalten.

Geeignete Einsatzmengen dieser zusätzlichen Katalysatoren richten sich nach dem Typ des Katalysators und liegen üblicherweise im Bereich von 0,01 bis 5 pphp (= Gewichtsteilen bezogen auf 100 Gewichtsteile Polyol) bzw. 0,1 bis 10 pphp für Kaliumsalze.

Geeignete Wasser-Gehalte in dem erfindungsgemäßen Verfahren gemäß der vorliegenden Erfindung hängen davon ab, ob zusätzlich zum Wasser noch physikalische Treibmittel eingesetzt werden oder nicht. Bei rein Wassergetriebenen Schäumen liegen die Werte typischerweise bei 1 bis 20 pphp, werden zusätzlich andere Treibmittel eingesetzt, verringert sich die Einsatzmenge auf üblicherweise 0 oder 0,1 bis 5 pphp. Zur Erlangung hoher Schaumraumgewichte werden weder Wasser noch andere Treibmittel eingesetzt.

Geeignete physikalische Treibmittel im Sinne dieser Erfindung sind Gase, beispielsweise verflüssigtes $CO_2$, und leichtflüchtige Flüssigkeiten, beispielsweise Kohlenwasserstoffe mit 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Sauerstoffhaltige Verbindungen wie Methylformiat und Dimethoxymethan, oder Chlorkohlenwasserstoffe, bevorzugt Dichlormethan und 1,2-Dichlorethan. Des Weiteren eignen sich Ketone (z.B. Aceton) oder Aldehyde (z.B. Methylal) als Treibmittel.

Neben Wasser und ggf. physikalischen Treibmitteln, können auch andere chemische Treibmittel eingesetzt werden, die mit Isocyanaten unter Gasentwicklung reagieren, wie beispielsweise Ameisensäure oder Carbonate.

Geeignete Flammschutzmittel im Sinne dieser Erfindung sind bevorzugt flüssige organische Phosphorverbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Die Verarbeitung der Formulierungen zu Schaumstoffen kann nach allen dem Fachmann geläufigen Verfahren erfolgen, beispielsweise im Handmischverfahren oder bevorzugt mit Hilfe von Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Durch das erfindungsgemäße Verfahren können Polyurethansysteme, insbesondere Polyurethanschäume erhalten werden, die sich dadurch auszeichnen, dass sie zumindest eines oder mehrere der Salze der Formel (I), vorzugsweise Salze der Formel (II aufweisen.

Bevorzugte erfindungsgemäße Polyurethansysteme, insbesondere Polyurethanschäume zeichnen sich dadurch aus, dass der Massenanteil an Salzen der Formel (I) von 0,001 bis 5 Massen-%, bezogen auf das Gewicht des gesamten Schaums, vorzugsweise von 0,01 bis 1,5 Massen-% beträgt.

Die erfindungsgemäßen Polyurethansysteme können z. B. Polyurethanbeschichtungen, Polyurethanadhäsive, Polyurethandichtmittel, Polyurethanelastomere oder Polyurethanschäume, insbesondere ein Polyurethanweichschaum, ein Polyurethanhartschaum, ein viscoelastischer Schaum, ein HR-Schaum, ein halbharter Polyurethanschaum, ein thermoverformbarer Polyurethanschaum oder ein Integralschaum sein. Die Bezeichnung Polyurethan ist hierbei als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Die erfindungsgemäßen Polyurethansysteme, insbesondere die Polyurethanschäume können z. B. als Kühlschrankisolierung, Dämmplatte, Sandwichelement, Rohrisolation, Sprühschaum, 1- & 1.5-Komponenten-Dosenschaum, Holzimitat, Modellschaum, Verpackungsschaum, Matratzen, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber verwendet werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

## Beispiele

Die Polyetherol-Synthese erfolgte gemäß der Reaktionsvorschrift der Patentschrift DE 199 40 797 A1, Synthesebeispiel Polyalkylenoxid A1.

### Beispiel A: Herstellung der Salze oligomerer und polymerer Säuren durch Umsetzung mit Carboxylierungsmittel

Unter Stickstoffatmosphäre wurden 0,5 mol der in Tabelle 1 aufgeführten Polyether durch Zugabe von 0,5 mol Natriummethylat in einem 3-Halskolben mit Thermometer und Rückflusskühler bei Raumtemperatur und anschließendem Abdestillieren von Methanol bei 110 °C im Vakuum in das jeweilige Alkoholat überführt. Nach ca. 2h wird das Vakuum mit Stickstoff aufgehoben und auf 80 °C abgekühlt.

Durch anschließende Zugabe von 0,5 mol Natriummonochloracetat bei 80 °C wurde ein entsprechender Polyether mit Säureendgruppe erhalten. Die Reaktionsmischung wird ca. 4 h bei 110 °C gerührt.

Die so erhaltenen Zwischenprodukte wurden wie in US 4,532,262 in Beispiel 4 beschrieben in die entsprechende Zinn(II)-Verbindung überführt.

### Beispiel B: Herstellung der Salze oligomerer und polymerer Säuren durch Umsetzung mit Säureanhydrid

Die Synthese erfolgte gemäß der Reaktionsvorschrift der Patentschrift DE 2 411 480A, Synthesebeispiel 1.

Die so erhaltenen Zwischenprodukte wurden wie in US 4,532,262 in Beispiel 4 beschrieben in die entsprechende Zinn(II)-Verbindung überführt.

Tabelle 1: eingesetzte Polyether und Zinngehalt der erhaltenen Katalysatoren

| Versuch | Startalkohol | Alkylen-/Arylalkylenoxideinheiten | Zinn(II)gehalt im Kat. theor. | bestimmt |
|---|---|---|---|---|
| Ab | Butanol | 2 EO | 21 | 21,5 |
| Ac | Butanol | 2 x EO, 2 x PO | 15 | 14,7 |
| Ad | Butanol | 2 x PO | 19 | 19,2 |
| Ae | Butanol | 2 x PO, 2 x EO | 15 | 14,4 |
| Af | TMHP | 2 x EO | 17 | 14,0 |
| Ag | Butanol | 1 x SO, 2 x EO | 15 | 12,0 |
| Ah | Butanol | 2 x SO, 2 x EO | 11 | 8,0 |
| Ai | Butanol | 1 x BO, 2 x EO | 17 | 15,7 |
| Aj | Butanol | 2 x BO, 2 x EO | 14 | 12,8 |
| Bb[1] | Butanol | 2 EO | 18,5 | 12,0 |
| Be[2] | Butanol | 2 EO | 17,5 | 15,5 |

[1] Synthese unter Verwendung von Maleinsäureanhydrid
[2] Synthese unter Verwendung von Glutarsäureanhydrid
EO = Ethylenoxid, PO = Propylenoxid, SO = Styroloxid, BO = Butylenoxid

Der Zinn(gesamt)-Wert wurde, nach erfolgtem Schwefelsäureaufschluss, mittels optischer Emissionsspektrometrie bestimmt. Als Anregungsart diente ein induktiv gekoppeltes Plasma. Als interner Standard wurde Kobalt verwendet.

Zinn(II)-Werte werden durch Titration mit Hilfe einer Iodlösung bestimmt nachdem eine saure Verseifung der Materie mit Salzsäure unter Schutzgas durchgeführt wurde.

**Beispiele 1 bis 11: Herstellung von Polyurethanschäumen**

Zur Herstellung der Polyurethanschäume wurde folgende Rezeptur verwendet: 100 Gew.-Teile Polyetherol (Hydroxylzahl = 47 mg KOH/g, 11-12 Gew.-% EO), 4 Gew.-Teile Wasser, 1 Gew.-Teil TEGOSTAB® BF 2370 (Marke der Th. Goldschmidt AG) (Silikonstabilisator), 0,1 Gew.-Teile TEGOAMIN® ZE 1 (Aminkatalysator der Evonik Goldschmidt GmbH), 50,6 Gew.-Teile Toluoldiisocyanat T 80 (Index 110), sowie eine variable Menge an KOSMOS® EF (Zinnricinoleat der Evonik Goldschmidt GmbH) bzw. KOSMOS® 29 (Zinnoktoat der Evonik Goldschmidt GmbH) als nicht erfindungsgemäße Salze bzw. der zu untersuchenden erfindungsgemäßen Zinncarboxylate aus Beispiel A und B.

Bei der Verschäumung wurden 400 g Polyol eingesetzt, die anderen Formulierungsbestandteile wurden entsprechend umgerechnet. In Tabelle 1 sind die variablen Bestandteile der Rezepturen der Beispielschäume 1 bis 12 zusammengefasst.

Zur Verschäumung wurden das Polyol, Wasser, Amin, Zinnkatalysator und Silikonstabilisator unter Rühren gut vermischt. Nach Zugabe des Isocyanats wurde mit einem Rührer 7 Sek. bei 3000 U / min gerührt. Das erhaltene Gemisch wurde in einen mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

Tabelle 2: Variable Bestandteile der Rezepturen in den Beispielschäumen 1 bis 11. Es wurden pro Katalysator jeweils zwei unterschiedliche Einsatzmengen gewählt.

| Beispiel Nr. | erfindungsgemäß | Salz[1] | Katalysator [pphp] | |
|---|---|---|---|---|
| 1 | Nein | a) | 0,15 | 0,20 |
| 2 | Nein | b) | 0,26 | 0, 35 |
| 3 | Ja | c) | 0,20 | 0,27 |
| 4 | Ja | d) | 0,30 | 0,39 |
| 5 | Ja | e) | 0,23 | 0,30 |
| 6 | Ja | f) | 0,30 | 0,40 |
| 7 | Ja | g) | 0,31 | 0,41 |
| 8 | Ja | h) | 0,36 | 0,48 |
| 9 | Ja | i) | 0,54 | 0,73 |
| 10 | Ja | j) | 0,28 | 0,37 |
| 11 | Ja | k) | 0,34 | 0,45 |
| 12 | Ja | l) | 0,36 | 0,48 |
| 13 | Ja | m) | 0,28 | 0,37 |

[1] a) = Zinn (II)-Salz der 2-Ethylhexansäure
b) = Zinn (II)-Salz der Rizinolsäure
c) = Zinn (II)-Salz der Säure Ab)
d) = Zinn (II)-Salz der Säure Ac)
e) = Zinn (II)-Salz der Säure Ad)
f) = Zinn (II)-Salz der Säure Ae)
g) = Zinn (II)-Salz der Säure Af)
h) = Zinn (II)-Salz der Säure Ag)
i) = Zinn (II)-Salz der Säure Ah)
j) = Zinn (II)-Salz der Säure Ai)
k) = Zinn (II)-Salz der Säure Aj)
1) = Zinn (II)-Salz der Säure Bb)
m) = Zinn (II)-Salz der Säure Bc)

**Physikalische Eigenschaften der Schäume**

Die hergestellten Schäume wurden anhand folgender physikalischer Eigenschaften beurteilt:

a) Rücksacken des Schaumstoffes nach dem Ende der Steigphase (= Rückfall):

Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen.

b) Schaumhöhe:

Die Endhöhe des Schaumes wird dadurch bestimmt, dass der Rückfall bzw. das Nachsteigen (gekennzeichnet durch ein negatives Vorzeichen s. Tabelle 3) von bzw. zu der Schaumhöhe nach dem Abblasen subtrahiert bzw. addiert wird.

c) Raumgewicht (RG) :

Die Bestimmung erfolgt wie in ASTM D 3574 - 08 unter Test A beschrieben durch Messung der Core Density.

d) Luftdurchlässigkeit/Porosität
e) Stauchhärte CLD, 40 %
f) Druckverformungsrest bei Kompression um 70 % für 22 h bei 70 °C
g) Rückprallelastizität (Ball rebound test)

Die Tests e) bis g) wurden gemäß ASTM D 1564-71 durchgeführt.
Der Test d) wurde wie folgt durchgeführt:

Methode:

Die Luftdurchlässigkeit/Porosität des Schaumes wurde durch eine Staudruckmessung am Schaumstoff ermittelt. Der gemessene Staudruck wurde in mm Alkoholsäule angegeben, wobei die niedrigeren Staudruckwerte den offeneren Schaum charakterisieren. Die Werte wurden im Bereich von 0 bis 300 mm gemessen.

Apparatur:

Die Messapparatur wurde durch die hausinterne Stickstoffleitung gespeist, ist daher an diese angeschlossen und besteht aus folgenden miteinander verbundenen Teilen:

Reduzierventil mit Manometer,
Durchflussregelschraube,
Waschflasche,
Durchflussmessgerät,
T-Stück,
Auflagedüse,
Skaliertes Glasrohr, mit Alkohol gefüllt

Die Waschflasche ist nur obligatorisch, wenn die Apparatur nicht aus der internen Leitung, sondern direkt mit technischem Flaschengas gespeist wird.
Das Durchflussmessgerät ist vor der ersten Inbetriebnahme gemäß den Herstellerangaben unter Verwendung der mitgelieferten Eichkurven zu kalibrieren und bei 8 L/min = 480 L/h mit einer Markierung zu versehen.
Die Auflagedüse ist spezifiziert durch eine Kantenlänge von 100 x 100 mm, ein Gewicht zwischen 800 und 1000 g, lichte Weite der Ausströmöffnung von 5 mm, lichte Weite des unteren Auflageringes von 30 mm.
Die Messflüssigkeit (techn. Alkohol (Ethanol)) kann zur Anhebung des optischen Kontrastes angefärbt werden.

Messvorgang:

Der Stickstoffvordruck wurde per Reduzierventil auf 1 bar eingestellt. Die Durchflussmenge wurde per Durchflussregelschraube auf die entsprechend 480 L/h eingeregelt. Die Flüssigkeitsmenge im skalierten Glasrohr wurde durch Alkohol auf ein Niveau gebracht, sodass keine Druckdifferenz aufgebaut und ablesbar ist. Für die eigentliche Vermessung des Prüfkörpers wurden fünf Einzelmessungen, vier an den vier Ecken und eine in der Mitte des Prüfkörpers durchgeführt. Hierzu wird an den Ecken die Auflagedüse kantenkongruent aufgelegt, die Mitte des Prüfkörpers wird geschätzt. Abgelesen wird, wenn sich ein konstanter Staudruck eingestellt hat.

Auswertung:

Die obere Messgrenze der Methode liegt bei 300 mm Flüssigkeitssäule (FS). Für die Protokollierung sind drei verschiedene Fälle zu unterscheiden:

1. Alle fünf Werte liegen unter 300 mm FS. In diesem Fall wird das arithmetische Mittel gebildet und protokolliert.
2. Alle fünf Werte sind größer oder gleich 300 mm FS. In diesem Fall ist der Wert > 300 bzw. 300 zu protokollieren.
3. Von den fünf Messwerten sind a) Werte explizit bestimmbar, b) Werte größer oder gleich 300: es wird das arithmetische Mittel aus fünf Werten gebildet, wobei für die b)-Messwerte jeweils 300 eingesetzt wird. Die Anzahl der Werte größer oder gleich 300 wird mit Schrägstrich von dem Mittelwert getrennt ebenfalls protokolliert.

Beispiel:

Vier Messwerte entsprechend 180, 210, 118 und 200 mm FS; ein Messwert > 300 mm FS ergibt (180 + 210 + 118 + 200 + 300) / 5. Protokolleintrag: 202/1.

Die Ergebnisse sind in Tabelle 3 zusammengefasst.

Tabelle 3 a: Ergebnisse der Bestimmung der physikalischen Eigenschaften

| Bsp. Nr. | Kat [pphp] | Steigzeit [s] | Rückfall [cm] [1] | Höhe [cm] | RG [2] [kg/$m^3$] |
|---|---|---|---|---|---|
| 1 | 0,15 | 117 | 0,0 | 30,2 | 24,20 |
| | 0,20 | 97 | 0,1 | 30,8 | 24,38 |
| 2 | 0,26 | > 180 | - | 31,8 | - |
| | 0,35 | 116 | 0,1 | 31,0 | - |
| 3 | 0,20 | 145 | -0,2 | 29,0 | 24,38 |
| | 0,27 | 116 | -0,2 | 30,3 | 23,99 |
| 4 | 0,30 | 150 | 0,0 | 29,5 | 24,30 |
| | 0,39 | 125 | 0,0 | 30,0 | 24,40 |
| 5 | 0,23 | 144 | 0,0 | 30,4 | - |
| | 0,30 | 121 | 0,0 | 30,2 | 24,37 |
| 6 | 0,30 | 143 | -0,1 | 29,6 | - |
| | 0,40 | 122 | -0,2 | 30,0 | 24,80 |
| 7 | 0,31 | 142 | -0,4 | 30,0 | - |
| | 0,41 | 120 | 0,0 | 30,3 | 24,15 |
| 8 | 0,36 | 139 | 0,0 | 29,2 | 24,62 |
| | 0,48 | 115 | -0,1 | 30,8 | 24,22 |
| 9 | 0,54 | > 180 | - | 29,0 | - |
| | 0,73 | 156 | -1,0 | 28,8 | - |
| 10 | 0,28 | 145 | -0,1 | 29,4 | 24,18 |
| | 0,37 | 119 | -0,2 | 29,9 | 24,45 |
| 11 | 0,34 | 139 | -0,1 | 29,4 | 24,09 |
| | 0,45 | 116 | -0,1 | 29,9 | 24,43 |

(fortgesetzt)

| Bsp. Nr. | Kat [pphp] | Steigzeit [s] | Rückfall [cm] [1] | Höhe [cm] | RG [2] [kg/m$^3$] |
|---|---|---|---|---|---|
| 12 | 0,36 | > 180 | - | 24,3 | - |
| | 0,38 | > 180 | - | 24,3 | 22,30 |
| 13 | 0,28 | 155 | -0,2 | 29,6 | 24,42 |
| | 0,37 | 126 | 0,0 | 29,9 | 24,45 |
| [1] fehlender Wert bedeutet: es erfolgte kein Abblasen des Schaumes.<br>[2] fehlende Werte bedeuten: nicht bestimmbar, da Schaumrisse | | | | | |

Tabelle 3 : Ergebnisse der Bestimmung der physikalischen Eigenschaften

| Bsp. Nr. | Porosität [mm] | CLD 40% [kPa] | Druckverformung | Rückprall [cm] |
|---|---|---|---|---|
| 1 | 8 | 3,5 | 2,8 | 41 |
| | 20 | 4,3 | 3,6 | 39 |
| 2 | 5 | - | - | - |
| | 6 | - | - | - |
| 3 | 8 | 3,4 | 2,8 | 41 |
| | 39 | 4,3 | 3,4 | 36 |
| 4 | 8 | 3,5 | 2,6 | 40 |
| | 29 | 4,3 | 3,6 | 38 |
| 5 | 10 | - | - | - |
| | 13 | 4,0 | 2,7 | 36 |
| 6 | 23 | - | - | - |
| | 31 | 4,3 | 3,5 | 37 |
| 7 | 7 | - | - | - |
| | 12 | 3,9 | 2,8 | 39 |
| 8 | 9 | 3,5 | 3,0 | 40 |
| | 34 | 4,4 | 3,4 | 36 |
| 9 | 8 | - | - | - |
| | | | | |
| 10 | 8 | 3,3 | 3,0 | 41 |
| | 17 | 4,1 | 3,0 | 38 |
| 11 | 9 | 3,4 | 2,8 | 40 |
| | 21 | 4,2 | 3,3 | 39 |
| 12 | 7 | - | - | - |
| | 15 | 3,7 | 3,0 | 34 |
| 13 | 10 | 3,5 | 3,0 | 40 |
| | 13 | 3,8 | 3,5 | 37 |

Wie an den Rückfällen zu erkennen ist, lassen sich bei Zugabe der erfindungsgemäßen Metallsalze der oligomeren und polymeren Säuren stabile Polyurethanschäume herstellen. Die Gewichtsteile der jeweiligen Katalysatoren wurden so berechnet, dass der Zinngehalt bei den zu vergleichenden Systemen äquimolar ist. Die physikalischen

Eigenschaften der Schaumstoffe verschlechtern sich beim Einsatz der erfindungsgemäßen Katalysatoren im Vergleich zum Einsatz von bekannten nicht. Im Vergleich zu Kosmos EF führen bereits geringe Einsatzmengen zu stabilen offenzelligen Schäumen, während mit Kosmos EF bei gleichem Zinngehalt starke Schaumrisse auftreten.

**Messung der Emissionen**

Die Säure-Emission wird in Anlehnung an die Mercedes-Benz-Prüfvorschrift PB VWT 709 bestimmt.

Im Folgenden wird die Durchführung der Thermodesorption mit anschließender Gaschromatograhie/Massenspektrometrie-Kopplung (GC/MS) beschrieben.

a) Messtechnik:

Die Thermodesorption wird mit einem Thermodesorber "TDS2" mit Probenwechsler der Fa. Gerstel, Mülheim, in Verbindung mit einem Hewlett Packard HP6890/HP5973 GC/MSD-System durchgeführt.

b) Messbedingungen:

| | |
|---|---|
| Thermodesorption | Gerstel TDS 2 |
| Desorptionstemperatur | 90 °C |
| Desorptionsdauer | 30 min |
| Fluss | 60 ml/min |
| Transferline | 280 °C |
| Kryofokussierung | HP 6890 PTV |
| Liner | Glasverdampferrohr mit silanisierter Glaswolle |
| Temperatur | -150 °C |

| | |
|---|---|
| GC | Kapillar-GC HP 6890 |
| Injektor | PTV Split 1:50 |
| Temperaturprogramm | -150 °C; 3 min; f 720 °C/min; 280 °C |
| Säule | 60 m * 0,25 mm Optima 5 MS dF 0,5 μm |
| Fluss | 1 ml/min const. flow |
| Temperaturprogramm | 50 °C; 5 min; ⇗ 3 °C/min; 92 °C;⇗⇗<br>5 °C/min; 160 °C;<br>10° C/min; 280° C; 20 min |
| Detektor | HP MSD 5973 |
| Modus | Scan 29-350 amu 2.3 scans/sec |
| Auswertung | Auswertung des Totalionenstrom-Chromatogramms Berechnung des 2-Ethylhexansäure-Peaks als Toluoläquivalent |

c) Kalibrierung

Zur Kalibrierung wird 1 μl eines Gemisches aus Toluol und Hexadecan in Pentan (je 0,6 mg/ml) auf ein gereinigtes, mit Tenax TA (mesh 35/60) gefülltes Adsorptionsröhrchen gegeben und vermessen (Desorption 5 min; 280 °C)

d) Probenvorbereitung

10 mg Schaumstoff werden in drei Teilproben in ein Thermodesorptionsröhrchen gesteckt. Dabei wird darauf geachtet, dass der Schaum nicht komprimiert wird.

e) Auswertung

Zur Quantifizierung der Säure-Emission wird der Peak, der mittels Massenspektrum als z.B. 2-Ethylhexansäure erkannt wird, über dessen Peakfläche mit dem Responsefaktor des Toluols aus der Kalibrierung als ppm-Toluoläquivalent bestimmt.

Tabelle 4 fasst die Ergebnisse der auftretenden Emissionen zusammen. Es wurde hier die jeweils höhere Katalysatormenge zur Herstellung der Schäume verwendet.

Tabelle 4: Ergebnisse der Emissionsbestimmung

| Bsp. Nr. | erfindungsgemäß | Kat [pphp] | Emission Prüfkammer [$\mu g/m^3$] | Emmission VOC [$\mu g/g$] | Emmission FOG [$\mu g/g$] |
|---|---|---|---|---|---|
| 1 | nein | 0,20 | 60 | 440 | < 10 |
| 2 | nein | 0,43 | 80 | 10 | < 10 |
| 3 | ja | 0,27 | 60 | 20 | < 10 |
| 4 | ja | 0,39 | 60 | 10 | < 10 |
| 5 | ja | 0,30 | 50 | 10 | 10 |
| 6 | ja | 0,40 | 40 | 10 | < 10 |
| 7 | ja | 0,41 | 80 | 20 | 90 |
| 8 | ja | 0,48 | 170 | 60 | 10 |
| 9 | ja | 0,90 | 240 | 50 | 20 |
| 10 | ja | 0,37 | 20 | 10 | 10 |
| 11 | ja | 0,45 | 70 | 10 | 10 |
| 12 | ja | 0,48 | 60 | 20 | <10 |
| 13 | ja | 0,37 | 50 | 10 | 10 |

Der Tabelle 4 kann entnommen werden, dass die Emissionswerte der hergestellten Schäume meist sehr gering sind. Es fällt allerdings auf, dass die Emission des Beispielschaumes Nr. 1 mit 440 $\mu g/g$ gravierend ist. Dieser hohe Wert ist auf die Emission von 2-Ethylhexansäure (413 $\mu g/g$) zurückzuführen.

Die höheren Emissionswerte der Schäume Nr. 8 und 9 im Prüfkammer- und VOC-Test sind auf die Emission von Acetophenon zurückzuführen, welches bei höheren Temperaturen aus den Styroloxid-Einheiten der eingesetzten Katalysatoren generiert wird.

## Patentansprüche

1. Katalysatorsystem, geeignet zur Katalyse der Herstellung von Polyurethansystemen, **dadurch gekennzeichnet, dass** das Katalysatorsystem ein Metallsalz einer Carbonsäure gemäß Formel (I)

$$R^1\text{-O-}[(AlkO)_a\text{-}(ArylalkO)_b]_x\text{-}\{[C(O)\text{-}Z]_y\text{-}(CR^2R^3)_z\}m^-COO^-M^{n+}{}_{1/n} \qquad (I)$$

mit

$R^1$ = linearer, verzweigter oder cyclischer Kohlenwasserstoffrest,
Z = gesättigter oder ungesättigter, aliphatischer, aromatischer oder gemischt-aliphatisch-aromatischer, linearer, verzweigter oder cyclischer Kohlenstoffrest mit 1 bis 30 Kohlenstoffatomen mit gegebenenfalls weiteren Heteroatomen, vorzugsweise ausgewählt aus Stickstoff, Sauerstoff, Schwefel und Phosphor,

$R^2$, $R^3$ = unabhängig voneinander H oder ein linearer oder verzweigter Kohlenwasserstoffrest mit 1 bis 10 Kohlenstoffatomen, vorzugsweise H oder Methyl, bevorzugt H, x = 1 bis 10,
y = 0 oder eine ganze Zahl ≥ 1,
z = 0 oder eine ganze Zahl ≥ 1,
m = eine ganze Zahl ≥ 1,
n = eine ganze Zahl ≥ 1,
M = Zinn,
AlkO = gleiche oder verschiedene Alkylenoxideinheiten, ArylalkO = gleiche oder verschiedene Arylalkylenoxideinheiten,
a = 0 bis 20,
b = 0 bis 20,
a + b ≥ 1, wobei die mit den Indices a und b bezeichneten Einheiten blockweise oder statistisch verteilt, vorzugsweise blockweise im Molekül in beliebiger Reihenfolge angeordnet sein können, enthält.

2. Katalysatorsystem nach Anspruch 1, **dadurch gekennzeichnet, dass** das Salz der Formel (I) ein Salz der Formel (II) ist

$$R^1\text{-O-}[(EO)_c^-(PO)_d^-(BO)_e^-(SO)_f]_x\text{-}\{(\text{-}\{[C(O)\text{-}Z]_y\text{-}(CR^2R^3)_z\}_m\text{-}COO^-M^{n+}{}_{1/n}$$

mit

$R^1$, $R^2$, $R^3$, Z, m, n, x, y, z und M wie in Anspruch 1 definiert,
EO = Ethylenoxideinheit,
PO = Propylenoxideinheit, die linear oder verzweigt sein kann,
BO = Butylenoxideinheit, die linear oder verzweigt sein kann,
SO = Styroloxideinheit,
c = 0 bis 20
d = 0 bis 20
e = 0 bis 20
f = 0 bis 20
c + d + e + f ≥ 1, wobei die mit den Indices c, d, e und f bezeichneten Einheiten blockweise oder statistisch verteilt im Molekül in beliebiger Reihenfolge angeordnet sein können.

3. Katalysatorsystem nach Anspruch 2, **dadurch gekennzeichnet, dass** die Salze der Formel (II)

A) solche sind, bei denen in Formel (II) e und f = 0, c und d jeweils ungleich 0 und die Summe c + d = 3 bis 5 ist, bevorzugt solche, bei denen $R^1$ ein Butyl-, Isopropyl-, tert-Butyl-, 3,5,5-Trimethyl-1-hexyl- oder 2-Octyldodecylrest ist, oder
B) solche sind, bei denen in Formel (II) c, e und f = 0, und d von 1 bis 3 ist, bevorzugt solche, bei denen $R^1$ ein Butylrest ist, oder
C) solche sind, bei denen in Formel (II) d, e und f = 0, und c von 1 bis 3 ist, bevorzugt solche, bei denen $R^1$ ein Butylrest ist, oder
D) solche sind, bei denen in Formel (II) d und f = 0, c und e jeweils ungleich 0 und die Summe c + e = 2 bis 4 ist, bevorzugt solche, bei denen $R^1$ ein Butyl-, Isopropyl-, tert-Butyl-, 3,5,5-Trimethyl-1-hexyl- oder 2-Octyldodecylrest ist, oder
E) solche sind, bei denen in Formel (II) d und e = 0, c und f jeweils ungleich 0 und die Summe c + f = 2 bis 4 ist, bevorzugt solche, bei denen $R^1$ ein Butyl-, Isopropyl-, tert-Butyl-, 3,5,5-Trimethyl-1-hexyl- oder 2-Octyldodecylrest ist.

4. Katalysatorsystem gemäß mindestens einem der Ansprüche 1 bis 3, **dadurch gekennzeichnet, dass** M = Sn und n = 2 ist.

5. Katalysatorsystem gemäß einem der Ansprüche 1 bis 4, **dadurch gekennzeichnet, dass** es eines oder mehrere organische Lösungsmittel enthält.

6. Katalysatorsystem gemäß einem der Ansprüche 1 bis 5, **dadurch gekennzeichnet, dass** $R^1$ ein linearer oder verzweigter Alkylrest mit 2 bis 4 Kohlenstoffatomen ist.

**7.** Verwendung von Katalysatorsystemen gemäß einem der Ansprüche 1 bis 6 bei der Herstellung von Polyurethanbeschichtungen, Polyurethanadhäsiven, Polyurethandichtmitteln, Polyurethanelastomeren oder Polyurethanschäumen/-schaumstoffen.

**8.** Verwendung nach Anspruch 7, **dadurch gekennzeichnet, dass** das Katalysatorsystem der Reaktionsmischung vor oder während der Reaktion zugegeben wird.

**9.** Polyurethansystem, **dadurch gekennzeichnet, dass** es eine Verbindung gemäß Formel (I), wie in einem der Ansprüche 1 bis 6 beschrieben, aufweist.

**10.** Polyurethansystem nach Anspruch 9, **dadurch gekennzeichnet, dass** es von 0,01 bis 5 Gew.-% an Verbindung (I) bezogen auf die Gesamtzusammensetzung des Polyurethansystems aufweist.

**11.** Polyurethansystem nach Anspruch 9 oder 10, **dadurch gekennzeichnet, dass** das Polyurethansystem eine Polyurethanbeschichtung, ein Polyurethanadhäsiv, ein Polyurethandichtmittel, ein Polyurethanelastomer, ein Polyurethanhartschaum, ein Polyurethanweichschaum, ein viskoelastischer Schaum, ein HR-Schaum, ein halbharter Polyurethanschaum, ein thermoverformbarer Polyurethanschaum oder ein Integralschaum ist.

**12.** Verwendung von Polyurethansystemen gemäß zumindest einem der Ansprüche 9 bis 11 als Kühlschrankisolierung, Dämmplatte, Sandwichelement, Rohrisolation, Sprühschaum, 1- & 1,5-Komponenten-Dosenschaum, Holzimitat, Modellschaum, Verpackungsschaum, Matratze, Möbelpolster, Automobil-Sitzpolster, Kopfstütze, Instrumententafel, Automobil-Innenverkleidung, Automobil-Dachhimmel, Schallabsorptionsmaterial, Lenkrad, Schuhsole, Teppichrückseitenschaum, Filterschaum, Dichtschaum, Dichtmittel und Kleber oder zur Herstellung entsprechender Produkte.

## Claims

**1.** Catalyst system suitable for catalyzing the production of polyurethane systems, **characterized in that** the catalyst system comprises a metal salt of a carboxylic acid of formula (I)

$$R^1\text{-O-[(AlkO)}_a\text{-(ArylalkO)}_b]_x\text{-\{[C(O)-Z]}_y\text{-(CR}^2R^3)_z\}_m\text{-COO}^-M^{n+}{}_{1/n} \qquad (I)$$

where

$R^1$ = linear, branched or cyclic hydrocarbon moiety,
Z = saturated or unsaturated, aliphatic, aromatic or mixed-aliphatic-aromatic, linear, branched, or cyclic hydrogen moiety having from 1 to 30 carbon atoms optionally with further heteroatoms, preferably selected from nitrogen, oxygen, sulfur and phosphorus,
$R^2$ and $R^3$ = mutually independently H or a linear or branched hydrocarbon moiety having from 1 to 10 carbon atoms, preferably H or methyl, with preference H,
x = from 1 to 10,
y = 0 or an integer $\geq$ 1,
z = 0 or an integer $\geq$ 1,
m = an integer $\geq$ 1,
n = an integer $\geq$ 1,
M = tin
AlkO = identical or different alkylene oxide units, ArylalkO = identical or different arylalkylene oxide units,
a = from 0 to 20,
b = from 0 to 20,
a + b $\geq$ 1, where the units indicated by the indices a and b can have blockwise or random distribution, preferably having blockwise arrangement in any desired sequence in the molecule.

**2.** Catalyst system according to Claim 1, **characterized in that** the salt of the formula (I) is a salt of the formula (II)

$$R^1\text{-O-[(EO)}_c\text{-(PO)}_d\text{-(BO)}_e\text{-(SO)}_f]_x\text{-\{(}^-\text{\{[C(O)-Z]}_y\text{-(CR}^2R^3)_z\}_m\text{-COO}^-M^{n+}{}_{1/n}$$

where

$R^1$, $R^2$, $R^3$, Z, m, n, x, y, z, and M are as defined in Claim 1,
EO = ethylene oxide unit,
PO = propylene oxide unit, which can be linear or branched,
BO = butylene oxide unit, which can be linear or branched,
SO = styrene oxide unit,
c = from 0 to 20
d = from 0 to 20
e = from 0 to 20
f = from 0 to 20
$c + d + e + f \geq 1$, where the units indicated by the indices c, d, e, and f can have blockwise or random distribution, in any desired sequence in the molecule.

**3.** Catalyst system according to Claim 2, **characterized in that** the salts of the formula (II)

A) are those where in formula (II) e and f = 0, c and d are respectively not equal to 0, and the sum c + d = from 3 to 5, preferably those where $R^1$ is a butyl, isopropyl, tert-butyl, 3,5,5-trimethyl-1-hexyl, or 2-octyldodecyl moiety, or
B) are those where in formula (II) c, e, and f = 0, and d is from 1 to 3, preferably those where $R^1$ is a butyl moiety, or
C) are those where in formula (II) d, e, and f = 0, and c is from 1 to 3, preferably those where $R^1$ is a butyl moiety, or
D) are those where in formula (II) d and f = 0, c and e are respectively not equal to 0, and the sum c + e = from 2 to 4, preferably those where $R^1$ is a butyl, isopropyl, tert-butyl, 3,5,5-trimethyl-1-hexyl or 2-octyldodecyl moiety, or
E) are those where in formula (II) d and e = 0, c and f are respectively not equal to 0, and the sum c + f = from 2 to 4, preferably those where $R^1$ is a butyl, isopropyl, tert-butyl, 3,5,5-trimethyl-1-hexyl or 2-octyldodecyl moiety.

**4.** Catalyst system according to at least one of Claims 1 to 3, **characterized in that** M = Sn and n = 2.

**5.** Catalyst system according to any of Claims 1 to 4, **characterized in that** it comprises one or more organic solvents.

**6.** Catalyst system according to any of Claims 1 to 5, **characterized in that** $R^1$ is a linear or branched alkyl moiety having from 2 to 4 carbon atoms.

**7.** Use of catalyst systems according to any of Claims 1 to 6 in producing polyurethane coatings, polyurethane adhesives, polyurethane sealants, polyurethane elastomers, or polyurethane foams.

**8.** Use according to Claim 7, **characterized in that** the catalyst system is added to the reaction mixture prior to or during the reaction.

**9.** Polyurethane system, **characterized in that** it comprises a compound of formula (I), as described in any of Claims 1 to 6.

**10.** Polyurethane system according to Claim 9, **characterized in that** it comprises from 0.01 to 5% by weight of compound (I), based on the entire composition of the polyurethane system.

**11.** Polyurethane system according to Claim 9 or 10, **characterized in that** the polyurethane system is a polyurethane coating, a polyurethane adhesive, a polyurethane sealant, a polyurethane elastomer, a rigid polyurethane foam, a flexible polyurethane foam, a viscoelastic foam, an HR foam, a semirigid polyurethane foam, a thermoformable polyurethane foam or an integral foam.

**12.** Use of polyurethane systems according to at least one of Claims 9 to 11 as refrigerator-insulation material, insulation sheet, sandwich element, pipe insulation, spray foam, single- & 1.5-component canister foam, wood-imitation product, modeling foam, packaging foam, mattress, furniture cushioning, automobile-seat cushioning, headrest, instrument panel, automobile-interior cladding product, automobile roof lining, sound-deadening material, steering wheel, shoe sole, carpet-backing foam, filter foam, sealant foam, sealant, or adhesive, or for producing corresponding products.

## Revendications

**1.** Système catalytique, approprié pour la catalyse de la fabrication de systèmes de polyuréthane, **caractérisé en ce que** le système catalytique contient un sel métallique d'un acide carboxylique selon la formule (I)

$$R^1\text{-O-}[(AlkO)_a\text{-}(ArylalkO)_b]_x\text{-}\{[C(O)\text{-}Z]_y\text{-}(CR^2R^3)_z\}_m\text{-}COO^-M^{n+}{}_{1/n} \quad (I)$$

avec

$R^1$ = un radical hydrocarboné linéaire, ramifié ou cyclique,
Z = un radical carboné saturé ou insaturé, aliphatique, aromatique ou aliphatique-aromatique mixte, linéaire, ramifié ou cyclique, de 1 à 30 atomes de carbone avec éventuellement d'autres hétéroatomes, de préférence choisis parmi l'azote, l'oxygène, le soufre et le phosphore,
$R^2$, $R^3$ = indépendamment l'un de l'autre, H ou un radical hydrocarboné linéaire ou ramifié de 1 à 10 atomes de carbone, de préférence H ou méthyle, avantageusement H, x = 1 à 10,
y = 0 ou un nombre entier ≥ 1,
z = 0 ou un nombre entier ≥ 1,
m = un nombre entier ≥ 1,
n = un nombre entier ≥ 1,
M = étain,
AlkO = des unités oxyde d'alkylène identiques ou différentes,
ArylalkO = des unités oxyde d'arylalkylène identiques ou différentes,
a = 0 à 20,
b = 0 à 20,
a + b ≥ 1, les unités désignées avec les indices a et b pouvant être réparties séquentiellement ou statistiquement, de préférence séquentiellement, dans la molécule dans un ordre quelconque.

**2.** Système catalytique selon la revendication 1, **caractérisé en ce que** le sel de formule (I) est un sel de formule (II)

$$R^1\text{-O-}[(EO)_c\text{-}(PO)_d\text{-}(BO)_e\text{-}(SO)_f]_x\text{-}\{(\text{-}\{[C(O)\text{-}Z]_y\text{-}(CR^2R^3)_z\}_m\text{-}COO^-Mn^+{}_{1/n}$$

avec

$R^1$, $R^2$, $R^3$, Z, m, n, x, y, z et M tels que définis dans la revendication 1,
EO = une unité oxyde d'éthylène,
PO = une unité oxyde de propylène, qui peut être linéaire ou ramifiée,
BO = une unité oxyde de butylène, qui peut être linéaire ou ramifiée,
SO = une unité oxyde de styrène,
c = 0 à 20,
d = 0 à 20,
e = 0 à 20,
f = 0 à 20,
c + d + e + f ≥ 1, les unités désignées avec les indices c, d, e et f pouvant être réparties séquentiellement ou statistiquement dans la molécule dans un ordre quelconque.

**3.** Système catalytique selon la revendication 2, **caractérisé en ce que** les sels de formule (II)

A) sont tels que, dans la formule (II), e et f = 0, c et d sont chacun différents de 0 et la somme c + d = 3 à 5, de préférence tels que $R^1$ est un radical butyle, isopropyle, tert-butyle, 3,5,5-triméthyl-1-hexyle ou 2-octyldodécyle, ou
B) sont tels que, dans la formule (II), c, e et f = 0, et d est de 1 à 3, de préférence tels que $R^1$ est un radical butyle, ou
C) sont tels que, dans la formule (II), d, e et f = 0, et c est de 1 à 3, de préférence tels que $R^1$ est un radical butyle, ou
D) sont tels que, dans la formule (II), d et f = 0, c et e sont chacun différents de 0 et la somme c + e = 2 à 4, de préférence tels que $R^1$ est un radical butyle, isopropyle, tert-butyle, 3,5,5-triméthyl-1-hexyle ou 2-octyldodécyle, ou
E) sont tels que, dans la formule (II), d et e = 0, c et f sont chacun différents de 0, et la somme c + f = 2 à 4, de préférence tels que $R^1$ est un radical butyle, isopropyle, tert-butyle, 3,5,5-triméthyl-1-hexyle ou 2-octyldodécyle.

4. Système catalytique selon au moins l'une quelconque des revendications 1 à 3, **caractérisé en ce que** M = Sn et n = 2.

5. Système catalytique selon au moins l'une quelconque des revendications 1 à 4, **caractérisé en ce qu'**il contient un ou plusieurs solvants organiques.

6. Système catalytique selon au moins l'une quelconque des revendications 1 à 5, **caractérisé en ce que** $R^1$ est un radical alkyle linéaire ou ramifié de 2 à 4 atomes de carbone.

7. Utilisation de systèmes catalytiques selon l'une quelconque des revendications 1 à 6 lors de la fabrication de revêtements de polyuréthane, d'adhésifs de polyuréthane, d'agents d'étanchéité de polyuréthane, d'élastomères de polyuréthane ou de mousses de polyuréthane.

8. Utilisation selon la revendication 7, **caractérisée en ce que** le système catalytique est ajouté au mélange réactionnel avant ou pendant la réaction.

9. Système de polyuréthane, **caractérisé en ce qu'**il comprend un composé selon la formule (I), tel que décrit dans l'une quelconque des revendications 1 à 6.

10. Système de polyuréthane selon la revendication 9, **caractérisé en ce qu'**il comprend 0,01 à 5 % en poids du composé (I), par rapport à la composition totale du système de polyuréthane.

11. Système de polyuréthane selon la revendication 9 ou 10, **caractérisé en ce que** le système de polyuréthane est un revêtement de polyuréthane, un adhésif de polyuréthane, un agent d'étanchéité de polyuréthane, un élastomère de polyuréthane, une mousse dure de polyuréthane, une mousse souple de polyuréthane, une mousse viscoélastique, une mousse HR, une mousse de polyuréthane semi dure, une mousse de polyuréthane thermoformable ou une mousse intégrale.

12. Utilisation de systèmes de polyuréthane selon au moins l'une quelconque des revendications 9 à 11 en tant qu'isolation de réfrigérateur, plaque isolante, élément en sandwich, isolation tubulaire, mousse pulvérisée, mousse en boîte à 1 et 1,5 composant, imitation de bois, mousse pour modèle, mousse d'emballage, matelas, rembourrage de meuble, rembourrage de siège automobile, appuie-tête, tableau de bord, habillage intérieur d'automobile, toit d'automobile, matériau d'absorption du son, volant, semelle de chaussure, mousse pour le côté arrière de tapis, mousse de filtration, mousse d'étanchéité, agent d'étanchéité et colle ou pour la fabrication de produits correspondants.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- BE 779607
- GB 1432281 A
- GB 1422056 A
- GB 1382538 A
- GB 1012653 A
- GB 982280 A
- EP 1013704 A
- WO 9836007 A
- US 4532262 A
- EP 1431331 A
- DE 102004007561
- US 3427256 A
- US 3427334 A
- US 3427335 A
- US 3278457 A
- US 3278458 A
- US 3278459 A
- DE 19940797 A1
- DE 2411480 A


### In der Beschreibung aufgeführte Nicht-Patentliteratur


- Huntsman Polyurethanes. **STEVE LEE.** The Polyurethanes Book. Verlag Wiley, vol. 140, 143-144